# EUROPÄISCHE PATENTSCHRIFT

(11) **EP 3 380 291 B1**
(45) Veröffentlichungstag und Bekanntmachung des Hinweises auf die Patenterteilung: **15.01.2020**
(21) Anmeldenummer: 16795244.9
(22) Anmeldetag: 26.10.2016
(51) Int. Cl.: B29B 7/74, B29B 7/72, B29B 7/84, B29B 7/86, B29B 7/88, B01D 19/00, C08G 18/40, C08J 9/12, B29C 67/24, B29K 75/00, B29C 44/12, B29L 31/30, C08G 101/00

(54) **VORRICHTUNG UND VERFAHREN ZUR AUFBEREITUNG EINES FLÜSSIGEN POLYMERGEMISCHES**
DEVICE AND METHOD FOR PREPARING A LIQUID POLYMER MIXTURE
DISPOSITIF ET PROCÉDÉ DE PRÉPARATION D'UN MÉLANGE POLYMÈRE LIQUIDE

(30) Priorität: 26.11.2015 DE 102015120526
(43) Veröffentlichungstag der Anmeldung: 03.10.2018
(73) Patentinhaber: Webasto SE, 82131 Stockdorf (DE)
(72) Erfinder: SACHER, Martin, 82131 Stockdorf (DE); RAUCH, Markus, 82131 Stockdorf (DE); WOKÖCK, Jan, 82131 Stockdorf (DE); ISBACH, Alexander, 82131 Stockdorf (DE); BARTL, Karl-Heinz, 82131 Stockdorf (DE); SEEBASS, Martin, 82131 Stockdorf (DE)
(74) Vertreter: advotec.
(86) Internationale Anmeldenummer: PCT/EP2016/075853
(87) Internationale Veröffentlichungsnummer: WO 2017/089064

(56) Entgegenhaltungen:
- EP-A1- 0 332 032
- EP-A1- 0 565 974
- DE-A1- 3 602 024
- DE-A1- 10 157 726
- US-A- 4 157 427
- US-A- 4 376 172
- US-A- 5 403 088

## Beschreibung

Die Erfindung betrifft eine Vorrichtung und ein darauf bezogenes Verfahren zur Aufbereitung eines flüssigen Polymergemisches, insbesondere zur direkten Verwendung bei Polyurethan-Systemen.

Aus der Praxis ist es bekannt, flüssige Polymergemische, wie Polyol-Zusammensetzungen für Polyurethan-Systeme, vor der Weiterverarbeitung zu nukleieren, das heißt mit einem Gas zu beladen. Damit erreicht man eine Reduzierung der Rohdichte, so dass das Polyurethan-System in seinem ausreagierten und ausgehärteten Zustand als Schaum, insbesondere als Hartschaum oder Weichschaum ausgebildet sein kann. Die Gasbeladung bzw. Nukleierung erfolgt bisher in Prozessbehältem, in die das betreffende Gas eingeleitet wird und in denen die Polyol-Zusammensetzung durch einen Rührer homogenisiert wird. Hierbei bleibt eine Gasbeladung, die durch ein Aufrühren und einen Transport der Polyol-Zusammensetzung eingetragen wurde, unberücksichtigt, so dass die Polyol-Zusammensetzung eine undefinierte Menge Gas enthält. Dies führt wiederum dazu, dass die Polyol-Zusammensetzung nur unzureichend homogenisiert werden kann und das Endprodukt, das heißt das Polyurethan-System in seinem ausgehärteten Zustand, aufgrund einer unzureichenden Dispergierung der Gasbeladung, Gaseinschlüsse aufweisen kann, die das Erscheinungsbild des Endprodukts beeinträchtigen und zu einer Nachbearbeitung oder zu einem Produktausschuss führen können.

Aus der Druckschrift EP 0 565 974 A1 ist eine Vorrichtung zur kontinuierlichen Steuerung einer Zellenzahl bei der Produktion von Polyurethan-Schaumstoffen aus Polyolen, Isocyanaten und Wasser bekannt. Hierbei erfolgt eine Vermischung der Komponenten in einem Mischkopf der Vorrichtung mit einem einstellbaren Einspritzdruck und einem einstellbaren Druck in einer Mischkammer.

Aus der Druckschrift US 4,376,172 ist ein gesteuerter Regelkreis für die Zugabe eines Gases in ein Gemisch aus einem derartigen Gas und einer Flüssigkeit bekannt. Das Gemisch kann Polyurethan-Werkstoff sein, der zum Spritzgießen bzw. zum Schäumen verwendet wird.

Aus der Druckschrift EP 0 332 032 A1 ist eine Vorrichtung zum Beladen einer fließfähigen Reaktionskomponente mit Gas für die Herstellung von Schaumstoffen bekannt.

Der Erfindung liegt daher die Aufgabe zugrunde, eine Vorrichtung und ein Verfahren zur Aufbereitung eines flüssigen Polymergemischs zu schaffen, das nach der Aufbereitung einen hohen Homogenisierungsgrad hat und das insbesondere zur direkten Verwendung bei Polyurethan-Systemen geeignet ist.

Diese Aufgabe ist erfindungsgemäß durch die Vorrichtung mit den Merkmalen des Patentanspruchs 1 sowie durch das Verfahren mit den Merkmalen des Patentanspruchs 8 gelöst.

Die Vorrichtung und das Verfahren nach der Erfindung ermöglichen es also, ein flüssiges Polymergemisch mit einer definierten Nukleierung bzw. Gasbeladung für eine Weiterverarbeitung und insbesondere zur direkten Verwendung bei Herstellung eines Polyurethan-Systems bereitzustellen. Durch die Entgasung des flüssigen Polymergemischs können Gasbeladungen des Polymergemischs, deren Ursache und deren Menge unbekannt sind, entfernt werden. Die anschließend erfolgende Begasung mit dem Additivgas kann in definierter Weise erfolgen, so dass die resultierende Gasmenge in dem Polymergemisch bekannt ist. Durch die dann folgende Homogenisierung des mit dem Additivgas beaufschlagten Polymergemischs ist eine gleichmäßige bzw. homogene Verteilung von durch das Additivgas gebildeten Gasblasen in dem Polymergemisch gewährleistet.

Bei einer bevorzugten Ausführungsform der Vorrichtung nach der Erfindung, mittels der eine Homogenisierung des Polymergemischs mit hoher Güte erreicht werden kann, homogenisiert die Homogenisierungseinrichtung das Polymergemisch nach einem Friktionsprozess. Hierzu kann insbesondere eine so genannte Kolloidmühle, insbesondere eine Zahnkolloidmühle eingesetzt werden, bei der zwischen einem Rotor mit einer Kegelfläche und einem korrespondierenden Stator mit Kegelfläche ein Mahlspalt ausgebildet ist, durch den das Polymergemisch gefördert wird. Der Mahlspalt hat vorzugsweise eine Breite, die geringer als 0,1 mm ist. In der Homogenisiereinrichtung wird ein flüssiges Polymergemisch erzeugt, in dem Gasbläschen aus dem Additivgas fein dispergiert sind. Die Homogenisiereinrichtung bildet also auch eine Dispergiereinrichtung.

Die Entgasungseinrichtung der Vorrichtung nach der Erfindung umfasst vorzugsweise einen Vakuumentlüfter. Ein Vakuumentlüfter arbeitet derart, dass das Polymergemisch mit seinen Luft- oder Gaseinschlüssen über ein Ventil in einen unter Vakuum stehenden, trichterförmigen Behälter gefördert wird. In dem Behälter strömt das Polymergemisch auf einen Schleuderteller, der drehend angetrieben ist und an seinem Umfang einen Siebkranz trägt. Durch die Fliehkraft wird das Polymergemisch an eine Innenwand des Behälters geschleudert. Dort entsteht ein dünner Polymergemischfilm, in dem vorhandene Gasbläschen aufplatzen. Dadurch frei werdende Gase werden wiederum durch eine Vakuumpumpe abgesaugt. Das bläschenfreie bzw. gasfreie Polymergemisch fließt an der Innenwand des trichterförmigen Behälters nach unten und kann weiter in Richtung der Begasungseinrichtung und der Homogenisiereinrichtung gefördert werden.

Um die Gasmenge, mit der das entgaste Polymergemisch beaufschlagt wird, exakt definieren zu können, umfasst die Begasungseinrichtung bei einer bevorzugten Ausführungsform der Vorrichtung nach der Erfindung einen Gasmassendurchflussmesser und ein Dosierventil, das an einer Leitung angeordnet ist, die die Entgasungseinrichtung und die Homogenisiereinrichtung verbindet.

Um auch die Menge des Polymergemischs, das mit dem Additivgas versetzt wird, exakt zu kennen, weist eine spezielle Ausführungsform der Vorrichtung nach der Erfindung stromab der Entgasungseinrichtung und stromauf der Begasungseinrichtung einen Massendurchflussmesser für das Polymergemisch auf.

Zweckmäßigerweise sind der Massendurchflussmesser für das Polymergemisch und die Begasungseinrichtung mit einer elektronischen Steuereinrichtung verbunden. Die Steuereinrichtung kann eine Eingabeeinheit aufweisen, mittels der der Begasungsgrad des flüssigen Polymergemischs vorgegeben wird. In Abhängigkeit von der Messung des Massendurchflussmessers für das Polymergemisch wird dann mittels der Begasungseinrichtung, die den Gasmassendurchflussmesser und das Dosierventil in Form eines Nadelventils umfassen kann, eine exakt definierte Gasmenge dem flüssigen Polymergemisch zugesetzt, das anschließend der Homogenisiereinrichtung zugeführt wird.

Bei dem Verfahren nach der Erfindung wird das Polymergemisch vor dem Entgasen in einem Vorratsbehälter gerührt, so dass etwaige lagerbedingte Schichtungen des flüssigen Polymergemischs aufgehoben werden.

Das Polymergemisch, das mit der Vorrichtung nach der Erfindung bzw. nach dem Verfahren nach der Erfindung aufbereitet wird, ist beispielsweise eine Polyol-Zusammensetzung, die zur Herstellung eines Polyurethan-Systems genutzt wird, dem bei einer Weiterverarbeitung in einem Misch- und Dosierkopf ein Isocyanat zugegeben wird. Das Polyurethan-System dient beispielsweise zur Herstellung einer Hartschaum-Randumschäumung eines flächigen Fahrzeugkarosserieelements bzw. eines Schiebedachdeckels eines Dachöffnungssystems eines Kraftfahrzeuges.

Das Additivgas, das dem Polymergemisch bei der Aufbereitung zugesetzt wird, ist beispielsweise Kohlendioxid. Denkbar ist es aber auch, andere Gase, insbesondere auch Inertgase einzusetzen.

Bei dem Verfahren nach der Erfindung können dem Polymergemisch auch Flüssigkeiten zugegeben werden, insbesondere Additive, die die Reaktivität beeinflussen. Beispielsweise können bei der Polyurethanherstellung eingesetzte Alkohole, Säuren, Inhibitoren, Flammschutzmittel, Katalysatoren, Vernetzer, Treibmittel und/oder Lösemittel zugegeben werden. Dies erfolgt vorzugsweise vor dem Einleiten des flüssigen Polymergemischs in die Homogenisiereinrichtung in definierter Weise, wobei die resultierende Rezeptur des Polymergemischs aufgrund des Einsatzes von Dosiersystemen und Massendurchflussmessern bekannt ist.

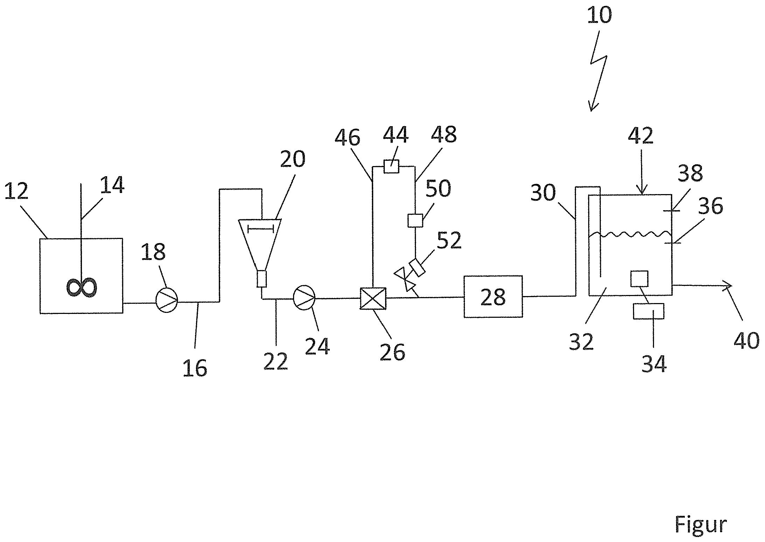

Weitere Vorteile und vorteilhafte Ausgestaltungen des Gegenstandes der Erfindung ergeben sich aus der Beschreibung, der Zeichnung und den Patentansprüchen.

Ein Ausführungsbeispiel einer Vorrichtung nach der Erfindung ist in der Zeichnung schematisch vereinfacht dargestellt und wird in der nachfolgenden Beschreibung näher erläutert.

Die einzige Figur der Zeichnung zeigt eine Vorrichtung nach der Erfindung zur Durchführung eines Verfahrens zur Aufbereitung einer flüssigen Polyol-Zusammensetzung.

In der Zeichnung ist eine Vorrichtung 10 zur Aufbereitung einer Polyol-Zusammensetzung dargestellt, die ein Reaktionspolymer für ein Polyurethan-System darstellt, das zur Herstellung einer Kunststoffrandumschäumung eines Schiebedachdeckels eines Dachöffnungssystems für ein Kraftfahrzeug dient.

Die Vorrichtung 10 umfasst einen Vorratsbehälter 12, in dem die Polyol-Zusammensetzung lagerbar ist und die mit einem Rührer 14 versehen ist, um eine etwaige lagerbedingte Schichtung der Polyol-Zusammensetzung aufzuheben. Der Vorratsbehälter 12 ist über eine Leitung 16, in der eine Förderpumpe 18 angeordnet ist, mit einer Entgasungseinrichtung 20 verbunden, die von einem Vakuumentlüfter gebildet ist. An den Vakuumentlüfter ist eine Ausgangsleitung 22 angeschlossen, in der eine weitere Förderpumpe 24 und ein Massendurchflussmesser 26 angeordnet sind und die zu einer Homogenisiereinrichtung 28 führt, welche von einer Zahnkolloidmühle gebildet ist. Stromauf der Homogenisiereinrichtung 28 ist an der Leitung 16 ein Dosierventil 52 angeordnet, über das der Polyol-Zusammensetzung ein Additivgas zugesetzt werden kann und das Bestandteil einer Begasungseinrichtung ist.

Die Homogenisiereinrichtung 28 weist eine Abgabeleitung 30 auf, die in einen Behälter 32 führt, in dem das aufbereitete Polymergemisch zwischengelagert werden kann und der mit einem Rührwerk 34 versehen ist. In dem Behälter 32 herrscht ein Überdruck zwischen 1 und 6 bar. Die Abgabeleitung 30 führt derart in den Behälter 32, dass das aufbereitete Polymergemisch unter Spiegel dem bereits in dem Behälter 32 vorhandenen Polymergemisch zugeführt wird. Der Spiegel bzw. Füllstand des Polymergemischs in dem Behälter 32 wird stets zwischen zwei Marken gehalten, von denen eine untere mit einem ersten Sensor 36 und eine obere mit einem zweiten Sensor 38 versehen ist. Der der unteren Marke zugeordnete Sensor 36 spricht an, wenn der Sollfüllstand in dem Behälter 32 unterschritten wird und weiteres flüssiges Polymergemisch aufbereitet werden muss. Der der oberen Marke zugeordnete zweite Sensor 38 spricht an, wenn der Sollfüllstand überschritten ist und die Aufbereitung des flüssigen Polymergemischs mittels der Vorrichtung 10 gestoppt werden muss.

Der Behälter 32 ist über eine Vorlaufleitung 40 mit Verarbeitungsstationen für die Polyol-Zusammensetzung verbunden, die jeweils einem Schäumwerkzeug zur Herstellung eines Kunststoffrahmens eines Schiebedachdeckels zugeordnet sind und in denen der Polyol-Zusammensetzung zur Ausbildung eines Polyurethan-Systems ein Isocyanat zugegeben wird. Zudem führt in den Behälter 32 eine Rücklaufleitung 42, die mit der Vorlaufleitung 40 eine Ringleitung zur Versorgung der Verarbeitungsstationen bildet.

Zur Steuerung der Aufbereitung der Polyol-Zusammensetzung weist die Vorrichtung 10 eine Steuereinrichtung 44 auf, die über eine Leitung 46 mit dem Massendurchflussmesser 26 verbunden ist und über eine Leitung 48 mit einem ebenfalls der Begasungseinrichtung zugeordneten Gasmassendurchflussmesser 50 und dem Dosierventil 52 verbunden ist, mittels dessen als Additivgas Kohlendioxid in die flüssige Polyol-Zusammensetzung eingebracht werden kann, und zwar stromauf von der Homogenisiereinrichtung 28 und stromab von dem Massendurchflussmesser 26.

Das mittels der Vorrichtung 10 durchführbare Verfahren zur Aufbereitung der Polyol-Zusammensetzung erfolgt in nachfolgend beschriebener Weise.

Die Polyol-Zusammensetzung, die in dem Vorratsbehälter 12 aufgerührt wird, wird mittels der Förderpumpe 18 in die Entgasungseinrichtung 20 gefördert und dort von undefinierten Gasbeladungen befreit. Anschließend wird das entgaste, aus der Polyol-Zusammensetzung bestehende Polymergemisch mittels der Förderpumpe 24 durch die Ausgangsleitung 22 gefördert. Hierbei wird zunächst die Menge der Polyol-Zusammensetzung mittels des Massendurchflussmessers 26 ermittelt und anschließend in Abhängigkeit von dieser Messung mittels der Steuereinrichtung 44 über den Gasmassendurchflussmesser 50 und das Dosierventil 52 Kohlendioxid beigemengt. Stromab des Dosierventils 52 wird die nun mit Kohlendioxid beaufschlagte Polyol-Zusammensetzung durch die Homogenisiereinrichtung 28 geführt, um Gasbläschen, die aus dem Kohlendioxid gebildet sind, in der Polyol-Zusammensetzung fein zu dispergieren. Dann wird die so aufbereitete Polyol-Zusammensetzung über die Abgabeleitung 30 in den Behälter 32 geleitet, so dass sie weiter verarbeitet werden kann, insbesondere durch Zugabe eines Isocyanats zu einem Polyurethan-System verarbeitet werden kann, das zur Herstellung einer Hartschaum-Randumschäumung eines Schiebedachdeckels oder dergleichen einsetzbar ist.

### Bezugszeichenliste

- 10: Vorrichtung
- 12: Vorratsbehälter
- 14: Rührer
- 16: Leitung
- 18: Förderpumpe
- 20: Entgasungseinrichtung
- 22: Ausgangsleitung
- 24: Förderpumpe
- 26: Massendurchflussmesser
- 28: Homogenisiereinrichtung
- 30: Abgabeleitung
- 32: Behälter
- 34: Rührwerk
- 36: Sensor
- 38: Sensor
- 40: Vorlaufleitung
- 42: Rücklaufleitung
- 44: Steuereinrichtung
- 46: Leitung
- 48: Leitung
- 50: Gasmassendurchflussmesser
- 52: Dosierventil

## Patentansprüche

1. Vorrichtung zur Aufbereitung eines flüssigen Polymergemischs, umfassend einen Vorratsbehälter (12) für das flüssige Polymergemisch, **dadurch gekennzeichnet, dass**
- eine Entgasungseinrichtung (20) für das flüssige Polymergemisch stromab des Vorratsbehälters (12) angeordnet ist;
- eine Begasungseinrichtung zur Beaufschlagung des flüssigen Polymergemischs mit einem Additivgas stromab der Entgasungseinrichtung (20) angeordnet ist;
- eine Homogenisiereinrichtung (28) für das mit dem Additivgas beaufschlagte Polymergemisch stromab der Begasungseinrichtung angeordnet ist; und
- eine Abgabeleitung (30) für das homogenisierte Polymergemisch mit der Homogenisiereinrichtung (28) verbunden ist.

2. Vorrichtung nach Anspruch 1, **dadurch gekennzeichnet, dass** die Homogenisiereinrichtung (28) das Polymergemisch nach einem Friktionsprozess homogenisiert.

3. Vorrichtung nach Anspruch 2, **dadurch gekennzeichnet, dass** die Homogenisiereinrichtung (28) eine Kolloidmühle, insbesondere eine Zahnkolloidmühle ist.

4. Vorrichtung nach einem der Ansprüche 1 bis 3, **dadurch gekennzeichnet, dass** die Entgasungseinrichtung (20) einen Vakuumentlüfter umfasst.

5. Vorrichtung nach einem der Ansprüche 1 bis 4, **dadurch gekennzeichnet, dass** die Begasungseinrichtung einen Gasmassendurchflussmesser (50) und ein Dosierventil (52) umfasst, das an einer Leitung (22) angeordnet ist, die die Entgasungseinrichtung (20) und die Homogenisiereinrichtung (28) verbindet.

6. Vorrichtung nach einem der Ansprüche 1 bis 5, **dadurch gekennzeichnet, dass** stromab der Entgasungseinrichtung (20) und stromauf der Begasungseinrichtung ein Massendurchflussmesser (26) für das Polymergemisch angeordnet ist.

7. Vorrichtung nach Anspruch 6, **dadurch gekennzeichnet, dass** der Massendurchflussmesser (26) für das Polymergemisch und die Begasungseinrichtung mit einer elektronischen Steuereinrichtung (44) verbunden sind.

8. Verfahren zur Aufbereitung eines flüssigen Polymergemischs unter Verwendung der Vorrichtung nach einem der vorangehenden Ansprüche, umfassend folgende Schritte:
- Entgasen des flüssigen Polymergemischs;
- anschließendes Begasen des entgasten, flüssigen Polymergemischs mit einem Additivgas;
- Homogenisieren des mit dem Additivgas versetzten, flüssigen Polymergemischs;
- Bereitstellen des homogenisierten flüssigen Polymergemischs.

9. Verfahren nach Anspruch 8, **dadurch gekennzeichnet, dass** das Homogenisieren in einer Kolloidmühle durchgeführt wird.

10. Verfahren nach Anspruch 8 oder 9, **dadurch gekennzeichnet, dass** das Entgasen in einem Vakuumentlüfter durchgeführt wird.

11. Verfahren nach einem der Ansprüche 8 bis 10, **dadurch gekennzeichnet, dass** nach dem Entgasen des Polymergemischs ein Massenstrom des Kunststoffausgangsmaterials gemessen wird und in Abhängigkeit von dem Massenstrom eine Menge des Additivgases bestimmt wird, die dem entgasten Polymergemisch zugesetzt wird.

12. Verfahren nach einem der Ansprüche 8 bis 11, **dadurch gekennzeichnet, dass** das Polymergemisch vor dem Entgasen in einem Vorratsbehälter gerührt wird.

13. Verfahren nach einem der Ansprüche 8 bis 12, **dadurch gekennzeichnet, dass** das Polymergemisch zur Herstellung eines Polyurethan-Systems verwendet wird und insbesondere eine Polyol-Zusammensetzung für das Polyurethan-System ist.

14. Verfahren nach einem der Ansprüche 8 bis 13, **dadurch gekennzeichnet, dass** das Additivgas Kohlendioxid und/oder Luft umfasst.

## Claims

1. A device for preparing a liquid polymer blend, comprising a storage container (12) for the liquid polymer blend, **characterised in that**
- a degassing device (20) for the liquid polymer blend is arranged downstream of the storage container (12);
- a gassing device for adding an additive gas to the liquid polymer blend is arranged downstream of the degassing device (20);
- a homogenisation unit (28) for the polymer blend to which the additive gas was added is arranged downstream of the gassing device; and
- an output pipe (30) for the homogenised polymer blend is connected to the homogenisation unit (28).

2. The device according to claim 1, **characterised in that** the homogenisation unit (28) homogenises the polymer blend according to a friction process.

3. The device according to claim 2, **characterised in that** the homogenisation unit (28) is a colloid mill, in particular a toothed colloid mill.

4. The device according to any one of the claims 1 to 3, **characterised in that** the degassing device (20) comprises a vacuum ventilator.

5. The device according to any one of the claims 1 to 4, **characterised in that** the gassing device comprises a gas mass flow meter (50) and a dosing valve (52), which is arranged at a pipe (22) which connects the degassing device (20) and the homogenisation unit (28).

6. The device according to any one of the claims 1 to 5, **characterised in that** a mass flow meter (26) for the polymer blend is arranged downstream of the degassing device (20) and upstream of the gassing device.

7. The device according to claim 6, **characterised in that** the mass flow meter (26) for the polymer blend and the gassing device are connected to an electronic control device (44).

8. A method for preparing a liquid polymer blend using the device according to any one of the preceding claims, comprising the following steps:
- degassing the liquid polymer blend;
- subsequently gassing the degassed liquid polymer blend with an additive gas;
- homogenising the liquid polymer blend provided with the additive gas;
- providing the homogenised liquid polymer blend.

9. The method according to claim 8, **characterised in that** the homogenisation takes place in a colloid mill.

10. The method according to claim 8 or 9, **characterised in that** the degassing takes place in a vacuum ventilator.

11. The method according to any one of the claims 8 to 10, **characterised in that** after degassing the polymer blend, a mass flow of the plastic base material is measured and an amount of the additive gas, which is added to the degassed polymer blend, is determined as a function of the mass flow.

12. The method according to any one of the claims 8 to 11, **characterised in that** the polymer blend is stirred in a storage container before the degassing.

13. The method according to any one of the claims 8 to 12, **characterised in that** the polymer blend is used for producing a polyurethane system and in particular is a polyol compound for the polyurethane system.

14. The method according to any one of the claims 8 to 13, **characterised in that** the additive gas comprises carbon dioxide and/or air.

## Revendications

1. Dispositif destiné à traiter un mélange de polymères liquide, comprenant une cuve de stockage (12) pour le mélange de polymères liquide, **caractérisé en ce que**
- une unité de dégazage (20) pour le mélange de polymères est disposée en aval de la cuve de stockage (12) ;
- une unité de gazage pour alimenter le mélange de polymères liquide en gaz additif est disposée en aval de l'unité de dégazage (20) ;
- une unité de homogénéisation (28) pour le mélange de polymères qui a été alimenté en gaz additif est disposée en aval de l'unité de gazage ; et
- un tuyau de sortie (30) pour le mélange de polymères homogénéisé est relié avec l'unité de homogénéisation (28).

2. Dispositif selon la revendication 1, **caractérisé en ce que** l'unité d'homogénéisation (28) homogénéise le mélange de polymères selon un processus de friction.

3. Dispositif selon la revendication 2, **caractérisé en ce que** l'unité de homogénéisation (28) est un broyeur colloïdal, en particulier un broyeur colloïdal á dents.

4. Dispositif selon l'une quelconque des revendications 1 à 3, **caractérisé en ce que** l'unité de dégazage (20) comprend un ventilateur à vide.

5. Dispositif selon l'une quelconque des revendications 1 à 4, **caractérisé en ce que** l'unité de gazage comprend un débitmètre de masse de gaz (50) et une valve de dosage (52) qui est disposée à un tuyau (22) qui relie l'unité de dégazage (20) et l'unité de homogénéisation (28).

6. Dispositif selon l'une quelconque des revendications 1 à 5, **caractérisé en ce qu'**un débitmètre massique (26) pour le mélange de polymères est disposé en aval de l'unité de dégazage (20) et en amont de l'unité de gazage.

7. Dispositif selon la revendication 6, **caractérisé en ce que** le débitmètre massique (26) pour le mélange de polymères et l'unité de gazage sont reliés avec une unité de commande (44) électronique.

8. Procédé pour traiter un mélange de polymères liquide en utilisant le dispositif selon l'une quelconque des revendications précédentes, comprenant les étapes suivantes :
- dégazer le mélange de polymères liquide ;
- ensuite gazer le mélange de polymères liquide dégazé avec un gaz additif ;
- homogénéiser le mélange de polymères liquide mélangé avec le gaz additif ;
- mettre le mélange de polymères liquide homogénéisé à disposition.

9. Procédé selon la revendication 8, **caractérisé en ce que** la homogénéisation est exécutée dans un broyeur colloïdal.

10. Procédé selon la revendication 8 ou 9, **caractérisé en ce que** le dégazage est exécuté dans un ventilateur à vide.

11. Procédé selon l'une quelconque des revendications 8 à 10, **caractérisé en ce qu'**un débit massique du produit de départ plastique est mesuré après le dégazage du mélange de polymères et **en ce qu'**une masse du gaz additif qui est ajoutée au mélange de polymères dégazé est déterminée en fonction du débit massique.

12. Procédé selon l'une quelconque des revendications 8 à 11, **caractérisé en ce que** le mélange de polymères est agité dans une cuve de stockage avant le dégazage.

13. Procédé selon l'une quelconque des revendications 8 à 12, **caractérisé en ce que** le mélange de polymères est utilisé pour produire un système de polyuréthane et **en ce qu'**il est en particulier un composé de polyol pour le système de polyuréthane.

14. Procédé selon l'une quelconque des revendications 8 à 13, **caractérisé en ce que** le gaz additif comprend du dioxyde de carbone et/ou de l'air.
